# DEMANDE DE BREVET EUROPEEN

(11) **EP 4 723 424 A1**
(43) Date de publication de la demande: **08.04.2026**
(21) Numéro de dépôt: 25206605.5
(22) Date de dépôt: 03.10.2025
(51) Int. Cl.: H02J 7/00, H01M 10/44

(54) **PROCÉDÉ ET SYSTÈME DE CHARGE D'UNE BATTERIE**

(30) Priorité: 04.10.2024 FR 2410736
(71) Demandeur: Commissariat à l'Energie Atomique et aux Energies Alternatives, 75015 Paris (FR)
(72) Inventeur: CASIEZ, Lara, 38054 GRENOBLE CEDEX 09 (FR); CELE, Jacopo, 38054 GRENOBLE CEDEX 09 (FR)
(74) Mandataire: Regimbeau

(57) **Abrégé**

La présente invention concerne un procédé de charge d'une batterie (BAT), comprenant les étapes suivantes :
charge de la batterie (BAT) par application d'une tension de charge (Vₘₐₓ) aux bornes de la batterie (BAT) ;
interruption de la charge lorsque le différentiel entre la tension de charge et la tension à vide (V_{OCV}) de la batterie (BAT) est inférieur à une marge (*η*) de manière à protéger la résistance interne de la batterie.

## Description

### DOMAINE DE L'INVENTION

L'invention concerne la surveillance de la charge d'une batterie afin d'éviter sa dégradation dans le temps au fur et à mesure des cycles de charge et décharge.

### ETAT DE LA TECHNIQUE

Une batterie notamment de type Lithium-ion comprend plusieurs cellules incluant un système électrochimique rechargeable pour fournir une tension nominale.

Avec le développement des systèmes électriques fonctionnant au moyen d'une batterie rechargeable, notamment les véhicules électriques, le temps de charge de la batterie est à optimiser.

Pour charger rapidement une batterie, il convient d'utiliser des tensions de charge importantes. Or plus les tensions utilisées sont importantes plus la batterie se dégrade rapidement au cours des cycles d'utilisation de la batterie.

Il existe un besoin d'optimiser une charge de batterie qui optimise un compromis entre durée de vie de la batterie et temps de charge.

### EXPOSE DE L'INVENTION

L'invention permet de surveiller la charge d'une batterie afin d'éviter sa dégradation rapide.

A cet effet, l'invention propose, selon un premier aspect, un procédé de charge d'une batterie, comprenant les étapes suivantes :
charge de la batterie par application d'une tension de charge aux bornes de la batterie ;
interruption de la charge lorsque le différentiel entre la tension de charge et la tension à vide de la batterie est inférieur à une marge de manière à protéger la résistance interne de la batterie.

Le procédé selon le premier aspect est complété par les caractéristiques suivantes seules ou en combinaison :
- après une première charge complète de la batterie, le procédé comprend les étapes suivantes : obtention d'une mesure du courant circulant dans la batterie pendant l'application de la tension de charge ; détermination du différentiel entre la tension de charge et la tension à vide de la batterie en fonction du courant mesuré et de la résistance interne de la batterie ; interruption de la charge dès que le différentiel déterminé est inférieur à la marge garantissant une tension à vide de la batterie inférieure à la tension de charge ;
- le différentiel entre la tension de charge et la tension à vide de la batterie est déterminé par *Rᵢₙₜ. Iₛ* avec *Iₛ* le courant mesuré et *Rᵢₙₜ* la résistance interne de la batterie.
- la résistance interne de la batterie est mesurée à la première charge complète, la batterie étant complétement chargée à la première charge lorsque le différentiel entre la tension de charge et la tension à vide de la batterie est inférieur à la marge protégeant la résistance interne de la batterie.
- la résistance interne de la batterie est mesurée avant l'application de la tension de charge, de préférence toutes les 10 à 100 charges.
- la marge est comprise entre 10 mV et 250 mV, de préférence 100 mV ;
- avant la charge de la batterie, une étape de mesure de la tension à vide, aux bornes de la batterie, la charge débutant si la tension mesurée est inférieure à un seuil à partir duquel la résistance interne de la batterie n'est plus protégée.
- à la première charge, le procédé comprend les étapes suivantes : a) charge de la batterie pendant une durée maximale, de préférence entre 10 secondes et 100 secondes, typiquement 60 secondes ; b) mesure de la résistance interne de la batterie ; c) mesure de la tension à vide aux bornes à l'issue de la durée déterminée ; d) détermination d'un différentiel entre la tension de charge et la tension à vide ; répétition des étapes a) à d) tant que le différentiel entre la tension de charge et la tension à vide de la batterie est supérieur à la marge protégeant la résistance interne de la batterie, le procédé comprenant au cours de l'étape a) : e) mesure du courant circulant dans la batterie pendant la charge ; f) détermination du différentiel entre la tension de charge et la tension à vide de la batterie en fonction du courant mesuré et de la résistance interne de la batterie ; g) interruption de la charge si le différentiel déterminé est inférieur à la marge.

L'invention propose selon un deuxième aspect, un système de charge comprenant un processeur pour la mise en œuvre du procédé selon le premier aspect de l'invention.

L'invention propose selon un troisième aspect un produit programme d'ordinateur comprenant des instructions de code de programme pour l'exécution des étapes du procédé selon le premier aspect de l'invention lorsque le programme est exécuté sur un ordinateur.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 représente un schéma équivalent d'une batterie et d'un système de charge de la batterie.
La figure 2 représente des courbes de l'évolution de la résistance interne de plusieurs batteries en fonction d'une tension à vide (ou de circuit ouvert) mesurée aux bornes de la batterie pour différentes tensions de charge de la batterie.
La figure 3 illustre un procédé de charge selon un premier mode de réalisation de l'invention.
La figure 4 illustre un procédé de charge selon un deuxième mode de réalisation de l'invention.

Sur l'ensemble des figures, les éléments similaires portent des références identiques.

### DESCRIPTION DETAILLEE DE L'INVENTION

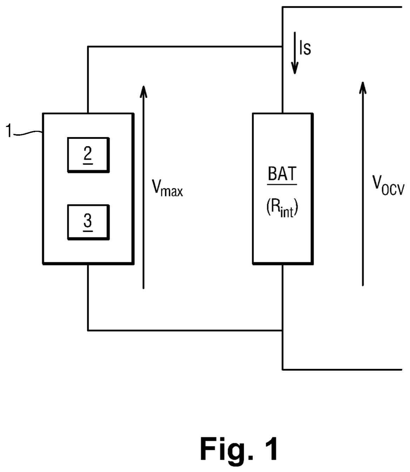

La figure 1 illustre une batterie BAT (par exemple Lithium-Ion) rechargeable au moyen d'un système 1 de charge d'une batterie comprenant un processeur 2 configuré pour mettre en œuvre un procédé de charge décrit ci-après. Le système 1 de charge est de préférence intégré au sein d'un chargeur de batterie, par exemple un chargeur de batterie par exemple d'un véhicule électrique. Le système 1 de charge comprend également une mémoire 3 pour stocker différentes valeurs utilisées au cours du procédé de charge. Le processeur 2 est configuré pour obtenir plusieurs mesures notamment une mesure de la tension à vide V_{OCV} (c'est-à-dire la tension lorsque la batterie est déconnectée de tout circuit) aux bornes de la batterie caractéristique de l'état de charge de la batterie BAT, une mesure du courant Iₛ circulant dans la batterie BAT. Le processeur 2 est également configuré pour commander l'application d'une tension Vₘₐₓ de charge aux bornes de la batterie BAT, et pour traiter les différentes mesures et de manière plus générale pour commander la charge de la batterie BAT.

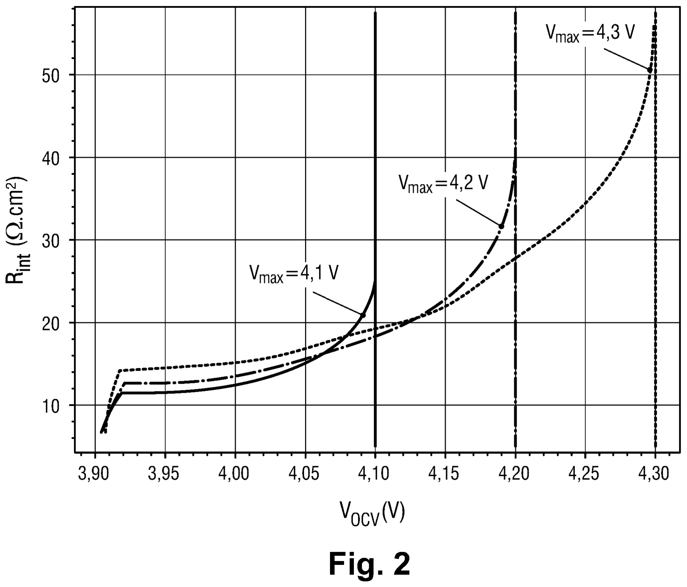

L'idée du procédé de l'invention est de protéger la batterie BAT pour éviter que sa résistance interne, notée Rᵢₙₜ, se dégrade au cours de sa charge. En effet, il a été constaté que lorsque la tension à vide V_{OCV} aux bornes de la batterie s'approche de la tension de charge Vₘₐₓ (ou de consigne), la résistance interne Rᵢₙₜ se dégrade impactant la durée de vie de la batterie. Un tel phénomène est illustré sur la figure 2 sur laquelle des courbes de l'évolution de la résistance interne Rᵢₙₜ en fonction de la tension à vide V_{OCV} mesurée aux bornes de la batterie sont montrées et ceci pour plusieurs batteries. Chaque courbe correspond à une tension de charge Vₘₐₓ (4,1 V, 4,2 V, 4,3 V) pour différentes batteries. D'après ces courbes on constate que la résistante interne Rᵢₙₜ croit quasi exponentiellement à mesure que la tension à vide V_{OCV} s'approche de la tension de charge Vₘₐₓ. Or plus cette résistance interne Rᵢₙₜ croit plus la batterie BAT se dégrade rapidement.

En conséquence, il est proposé d'éviter qu'au cours de la charge de la batterie, la tension à vide V_{OCV} n'atteigne cette tension de charge Vₘₐₓ. Ainsi, une marge *η = Vₘₐₓ* -*V_{OCV}* garantissant une tension à vide V_{OCV} mesurée aux bornes de la batterie inférieure à la tension de charge Vₘₐₓ est définie. Une telle marge dépend de la batterie et est typiquement *η* < 100 *mV* pour une batterie tout-solide. La surveillance de la tension à vide V_{OCV} est donc pertinente pour optimiser la charge de la batterie. La surveillance de cette tension à vide s'effectue soit par une mesure directe soit en passant par une mesure du courant selon l'un ou l'autre des modes de réalisation décrit ci-après.

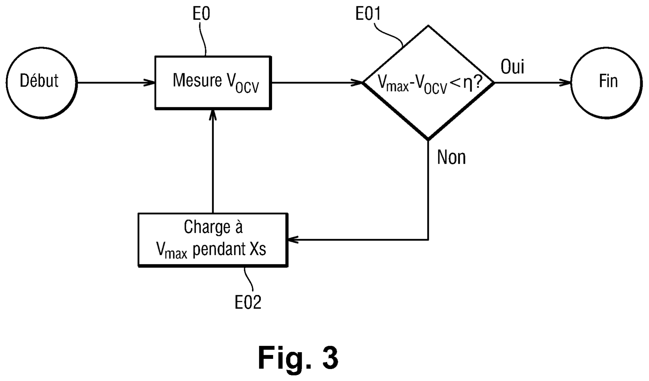

Selon un premier mode de réalisation, illustré sur la figure 3, au début du procédé, le système mesure la tension à vide V_{OCV} aux bornes de la batterie (étape E0). Si une différence de potentiel entre la tension de charge Vₘₐₓ et la tension à vide V_{OCV} est supérieure à la marge *η* (étape E01) alors la charge démarre par application de la tension de charge Vₘₐₓ (étape E02) pendant une durée déterminée (X s) typiquement entre 10 secondes et 100 secondes, de préférence 60 secondes. La tension de charge Vₘₐₓ est typiquement comprise entre 4,1 V et 10 V mais peut varier en fonction du type de batterie. A l'issue de cette durée la tension à vide V_{OCV} aux bornes de la batterie (étape E0) est mesurée et la charge se poursuit tant que la différence de potentiel entre la tension de charge Vₘₐₓ et la tension à vide V_{OCV} est supérieure à la marge *η* sinon elle se termine. Selon ce premier mode de réalisation, la résistance interne de la batterie est protégée et il est nécessaire d'interrompre la charge pour mesurer la tension à vide V_{OCV}.

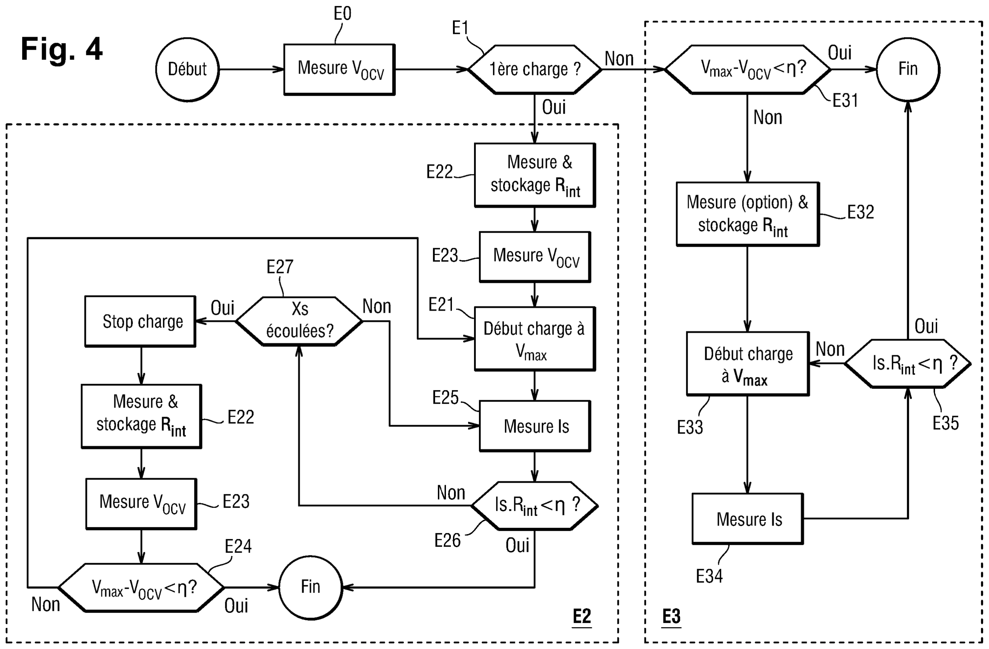

Selon un deuxième mode de réalisation, illustré sur la figure 4, pour améliorer le temps de charge, c'est le courant circulant dans la batterie qui est mesuré pour éviter d'avoir à interrompre la charge en utilisation habituelle après la première charge.

Selon ce deuxième mode de réalisation, au début du procédé, le système détecte (étape E1) si c'est la première charge de la batterie (c'est-à-dire qu'elle n'a jamais été chargée) et mesure la tension à vide V_{OCV} aux bornes de la batterie (étape E0). La détection de la première charge dépend du type de batterie. A la première charge de la batterie, il est procédé à un conditionnement (étape E2) de la batterie qui consiste à charger complètement la batterie c'est-à-dire jusqu'à la limite de charge telle qu'une différence de potentiel entre la tension de charge et la tension à vide V_{OCV} est inférieure à la marge *η*. Pour ce faire, la tension de charge est appliquée (étape E21) à la batterie pendant une durée maximale (X s) par exemple entre 10 secondes et 100 secondes, de préférence 60 secondes. A l'issue de cette durée, l'application de la tension de charge Vₘₐₓ est interrompue et la résistance interne Rᵢₙₜ de la batterie est mesurée ainsi que la tension à vide V_{OCV} (étape E22 et E23). Ces périodes de charge et mesure de la résistance et de la tension sont répétées tant que la différence de potentiel entre la tension de charge et la tension à vide est supérieure à la marge *η*, cette différence étant calculée et comparée à la marge (étape E24). Dès que cette différence de potentiel est inférieure à la marge, le conditionnement s'interrompt.

Au cours de la charge il est aussi procédé à la mesure du courant Is circulant dans la batterie (étape E25) et le produit du courant mesuré avec la résistance interne Rᵢₙₜ dernièrement mesurée de la batterie est déterminé (étape E26). Si ce produit est inférieur à la marge *η* alors la charge à la tension Vₘₐₓ s'interrompt sinon elle se poursuit tant que ce produit est supérieur à la marge *η* et tant que la durée X s ne s'est pas écoulée (étape E27). Ceci permet de protéger la résistance interne Rᵢₙₜ de la batterie pendant la période de charge.

Au cours des charges suivantes (étape E3), il est d'abord vérifié l'état de charge en mesurant la tension à vide V_{OCV} (étape E31). Si la différence de potentiel entre la tension de charge et la tension V_{OCV} à vide est supérieure à la marge, alors la charge démarre sinon il n'est pas procédé à la charge, le procédé s'interrompt.

Avant de démarrer la charge, une mesure de la résistance interne de la batterie est effectuée et cette valeur est stockée (étape E32). Cette mesure n'est pas nécessaire systématiquement car le système de charge peut utiliser la mesure de la résistance interne de la batterie à l'issue de la première charge. Ceci est particulièrement vrai si cette résistance ne varie pas au cours du temps. Bien entendu si cette mesure n'est pas disponible alors la mesure de la résistance interne est effectuée. Cette mesure peut se faire périodiquement tous les N cycles de charge avec N compris entre 10 et 100.

Ensuite, la tension de charge est appliquée (étape E33) et au cours de la charge le courant Is circulant dans la batterie est mesuré (étape E34). Ensuite, le produit du courant mesuré avec la résistance interne de la batterie est déterminé (étape E35) et si ce produit est inférieur à la marge, alors la charge s'interrompt sinon elle se poursuit tant que ce rapport est supérieur à la marge.

Autrement dit il est vérifié si *Iₛ < η*/*Rᵢₙₜ.* En effet, quand on applique une tension a une batterie, qui a une certaine tension à vide V_{OCV}, c'est la différence entre V_{OCV} and Vₘₐₓ qui détermine le courant et non pas directement Vₘₐₓ. Par conséquent, le produit entre la résistance interne Rᵢₙₜ de la batterie et le courant Iₛ circulant dans la batterie est donné par la marge *η*. C'est aussi parce que la tension à vide V_{OCV} est mesurée par rapport à la masse et non par rapport au potentiel de la batterie. La tension à vide V_{OCV} et la tension Vₘₐₓ sont référencées par rapport à la masse et non pas l'une à l'autre (Vₘₐₓ n'est pas une différence de potentiel, mais une valeur absolue).

## Revendications

1. Procédé de charge d'une batterie (BAT), comprenant les étapes suivantes :
charge (E01, E21, E33) de la batterie (BAT) par application (E02, E21, E33) d'une tension de charge (Vₘₐₓ) aux bornes de la batterie (BAT) ;
interruption (E01, E31, E35) de la charge lorsque le différentiel entre la tension de charge (Vₘₐₓ) et la tension à vide (V_{OCV}) de la batterie (BAT) est inférieur à une marge (*η*) de manière à protéger la résistance interne de la batterie.

2. Procédé selon la revendication 1, comprenant les étapes suivantes, mises en œuvre après une première charge (E2) complète de la batterie (BAT) :
obtention (E34) d'une mesure du courant (Iₛ) circulant dans la batterie (BAT) pendant l'application de la tension de charge (Vₘₐₓ) ;
détermination (E35) du différentiel entre la tension de charge (Vₘₐₓ) et la tension à vide (V_{OCV}) de la batterie (BAT) en fonction du courant (Is) mesuré et de la résistance interne (*Rᵢₙₜ*) de la batterie (BAT) ;
interruption de la charge dès que le différentiel déterminé est inférieur à la marge (*η*) garantissant une tension à vide (V_{OCV}) de la batterie (BAT) inférieure à la tension de charge (Vₘₐₓ).

3. Procédé selon la revendication 2, dans lequel le différentiel entre la tension de charge et la tension à vide (V_{OCV}) de la batterie (BAT) est déterminé (E35) par *Rᵢₙₜ. Iₛ* avec *Iₛ* le courant mesuré et *Rᵢₙₜ* la résistance interne de la batterie.

4. Procédé selon la revendication 3, dans lequel la résistance interne (*Rᵢₙₜ*) de la batterie est mesurée (E22) à la première charge complète, la batterie étant complétement chargée à la première charge (E2) lorsque le différentiel entre la tension de charge et la tension à vide (V_{OCV}) de la batterie est inférieur à la marge (*η*) protégeant la résistance interne de la batterie.

5. Procédé selon la revendication 3, dans lequel la résistance interne (*Rᵢₙₜ*) de la batterie est mesurée (E32) avant l'application de la tension de charge, de préférence toutes les 10 à 100 charges.

6. Procédé selon l'une des revendications précédentes, dans lequel la marge (*η*) est comprise entre 10 mV et 250 mV, de préférence 100 mV.

7. Procédé selon l'une des revendications précédentes, comprenant avant la charge de la batterie, une étape de mesure (E0) de la tension à vide (V_{OCV}), aux bornes de la batterie, la charge débutant si la tension mesurée est inférieure à un seuil à partir duquel la résistance interne de la batterie n'est plus protégée.

8. Procédé selon l'une des revendications précédentes, dans lequel à la première charge (E2), le procédé comprend les étapes suivantes
a) charge (E21) de la batterie pendant une durée (X) maximale, de préférence entre 10 secondes et 100 secondes, typiquement 60 secondes ;
b) mesure (E22) de la résistance interne de la batterie ;
c) mesure (E23) de la tension à vide (V_{OCV}) aux bornes à l'issue de la durée déterminée ;
d) détermination (E24) d'un différentiel entre la tension de charge et la tension à vide (Vₘₐₓ - Vocv) ;
répétition des étapes a) à d) tant que le différentiel entre la tension de charge et la tension à vide (V_{OCV}) de la batterie est supérieur à la marge (*η*) protégeant la résistance interne de la batterie, le procédé comprenant au cours de l'étape a)
e) mesure (E25) du courant (Is) circulant dans la batterie (BAT) pendant la charge ;
f) détermination (E26) du différentiel entre la tension de charge (Vₘₐₓ) et la tension à vide (V_{OCV}) de la batterie (BAT) en fonction du courant (Is) mesuré et de la résistance interne (*Rᵢₙₜ*) de la batterie (BAT) ;
g) interruption (E26) de la première charge si le différentiel déterminé est inférieur à la marge (*η*).

9. Système (1) de charge d'une batterie comprenant un processeur (1) pour mettre en œuvre un procédé selon l'une des revendications précédentes.

10. Produit programme d'ordinateur comprenant des instructions de code de programme pour l'exécution des étapes du procédé selon l'une des revendications 1 à 8, lorsque le programme est exécuté sur un ordinateur.
